# EUROPÄISCHE PATENTSCHRIFT

(11) **EP 3 481 660 B1**
(45) Veröffentlichungstag und Bekanntmachung des Hinweises auf die Patenterteilung: **16.09.2020**
(21) Anmeldenummer: 17732107.2
(22) Anmeldetag: 22.06.2017
(51) Int. Cl.: B60K 17/28, B60K 25/06

(54) **NEBENABTRIEBSANORDNUNG**
AUXILIARY POWER TAKE-OFF ASSEMBLY
DISPOSITIF DE SORTIE SECONDAIRE

(30) Priorität: 05.07.2016 DE 102016212209
(43) Veröffentlichungstag der Anmeldung: 15.05.2019
(73) Patentinhaber: ZF Friedrichshafen AG, 88046 Friedrichshafen (DE)
(72) Erfinder: TRÜBENBACH, Michael, 88045 Friedrichshafen (DE); PREUSS, Michael, 88048 Friedrichshafen (DE); KNIESS, Patrick, 88326 Aulendorf (DE)
(74) Vertreter: ZF Friedrichshafen AG
(86) Internationale Anmeldenummer: PCT/EP2017/065399
(87) Internationale Veröffentlichungsnummer: WO 2018/007163

(56) Entgegenhaltungen:
- EP-A2- 2 159 094
- DE-A1- 10 248 400
- DE-B- 1 037 277

## Beschreibung

Die Erfindung betrifft eine Nebenabtriebsanordnung mit einem motorabhängigen Nebenabtrieb für ein Fahrzeuggetriebe mit einem Drehmomentwandler gemäß dem Oberbegriff des Anspruchs 1, und die Erfindung betrifft ein Kraftfahrzeug mit einer solchen Nebenabtriebsanordnung.

Fahrzeuggetriebe in Nutzfahrzeugen weisen häufig eine Nebenabtriebsanordnung auf, durch die verschiedenartige angeschlossene Zusatzaggregate im Fahrzeug angetrieben werden können. Dies gilt in gleicher Weise für Getriebe mit einer Reibscheibenkupplung, als auch für mit einem Drehmomentwandler ausgestattete Fahrzeuggetriebe.

Anwendung finden Nebenabtriebsanordnungen insbesondere in Bussen, Lastkraftwagen, Baumaschinen, landwirtschaftlichen Fahrzeugen oder Sonderfahrzeugen. Nebenabtriebe gibt es in fahrabhängiger, kupplungsabhängiger oder motorabhängiger Ausführung. Fahrabhängige Nebenabtriebe versorgen beispielsweise das Hydrauliksystem von Zweikreislenkungen mit Arbeitsdruck, wodurch rollende Fahrzeuge auch dann lenkbar bleiben, wenn durch einen Motorausfall das Primärsystem ausgefallen ist. Kupplungsabhängige Nebenabtriebe eignen sich für Kurzzeit- oder Dauerbetrieb während der Fahrt oder im Stand. Motorabhängige Nebenabtriebe unterscheiden sich von kupplungsabhängigen Nebenabtrieben dadurch, dass bei motorabhängigen Nebenabtrieben eine direkte Verbindung zur Kurbelwelle des Antriebsmotors des Fahrzeugs unter Umgehung der Fahrzeugkupplung oder des Drehmomentwandlers besteht, so dass diese Nebenabtriebe ständig mechanisch mit der Kurbelwelle des Antriebsmotors verbunden sind. Sie sind für hohe Konstantleistungen im Dauerbetrieb ausgelegt und können mit dem maximalen Motordrehmoment belastet werden. Sie lassen sich bei fahrendem und stehendem Fahrzeug betreiben und unter Last zu- oder abschalten. Typische Einsatzbereiche sind anzutreibende Zusatzaggregate wie Hochdruckpumpen für Feuerwehren, Kanalhochdruckspül- und -saugfahrzeuge, Erdbohrgeräte, Betonmischer und Betonpumpen.

Aus der DE 26 56 669 C2 ist ein motorabhängiger Nebenabtrieb an einem Fahrzeuggetriebe mit Drehmomentwandler bekannt geworden, bei dem eine Antriebsmaschine des Fahrzeugs permanent über die Pumpenwelle des Drehmomentwandlers mit einer Antriebswelle einer Nebenabtriebsanordnung verbunden ist. Die Antriebswelle wirkt auf eine Übertragungskette, die aus wenigstens einem als Zahnrad ausgebildeten Antriebselement und einem Abtriebselement besteht, wobei das Abtriebselement der Übertragungskette mit einem anzutreibenden Zusatzaggregat verbunden ist. Das Antriebselement der Übertragungskette treibt gleichzeitig noch eine Druckmittelpumpe des Getriebes an. Das Abtriebselement weist ein Schaltelement auf, mit dem das Zusatzaggregat an die Nebenabtriebsanordnung angekoppelt werden kann.

Durch eine derartige Anordnung läuft die gesamte Übertragungskette der Nebenabtriebsanordnung immer mit. Die Zahneingriffe des Antriebselementes drehen konstant mit, da das Schaltelement der Nebenabtriebsanordnung erst im Abtriebselement angeordnet ist und somit nur die nachgeschalteten Bauteile entkoppelt werden können. Somit ergeben sich auch bei geringer Last immer ein Wälzverlust und insbesondere eine erhöhte Akustikanregung aus der Verzahnung. Zudem baut die Schaltkupplung inklusive der zugehörigen Aktuatorik in dem Abtriebselement der Nebenabtriebsanordnung sehr groß und macht die Nebenabtriebsanordnung zu einem großen und schweren Anbauteil.

Aus Fig. 2 der nächstliegenden DE 10 37 277 B ist ein Fahrzeugtriebwerk für Ackerschlepper bekannt, bei dem einem Geschwindigkeitswechselgetriebe eine Flüssigkeitskupplung vorgeschaltet ist und bei dem eine angetriebene Zapfwelle vorgesehen ist, deren Antrieb von der Flüssigkeitskupplung abgeleitet ist. Hierbei wird eine Vorgelegestufe durch eine mit einem Pumpenrad der Flüssigkeitskupplung verbundene Hohlwelle gebildet. Die Hohlwelle trägt eine Zapfwellenkupplung und treibt darüber die Zapfwelle an.

Der vorliegenden Erfindung liegt die Aufgabe zugrunde, eine Nebenabtriebsanordnung zu verbessern und insbesondere die Geräuschentwicklung und den erforderlichen Bauraumbedarf positiv zu beeinflussen, sowie Verluste zu verringern.

Die Aufgabe wird gelöst durch eine Nebenabtriebsanordnung mit den Merkmalen des Anspruchs 1 und durch ein Kraftfahrzeug mit den Merkmalen des Anspruchs 8. Ausgestaltungen sind Gegenstand von Unteransprüchen.

In einem Fahrzeug mit einem Getriebe mit Drehmomentwandler ist eine Nebenabtriebsanordnung vorgesehen. Die Pumpenwelle des Drehmomentwandlers ist permanent mit einem Antriebsmotor des Fahrzeugs verbunden und steht ihrerseits mit einer Antriebswelle der Nebenabtriebsanordnung in einer drehmomentübertragenden Verbindung. Die Nebenabtriebsanordnung weist eine Übertragungskette auf, die eine Drehmomentübertragung zwischen der Antriebswelle und einem anzutreibenden Zusatzaggregat ermöglicht. Das Zusatzaggregat kann eines der einleitend beschriebenen Bauteile im Umfeld des Nutzfahrzeugs sein. Die Übertragungskette besteht wenigstens aus einem Antriebselement, das zur Übernahme von Drehmoment von der Antriebswelle eingerichtet ist, und einem Abtriebselement, das zur Übergabe von Drehmoment auf das Zusatzaggregat eingerichtet ist. In der Nebenabtriebsanordnung ist ein Schaltelement vorgesehen, das erfindungsgemäß zwischen der Antriebswelle und dem Antriebselement der Übertragungskette wirkend angeordnet ist und der wahlweisen Verbindung der Antriebswelle mit dem Antriebselement dient. Hiermit kann erreicht werden, dass die Nebenabtriebsanordnung bereits unmittelbar hinter der mit der Pumpenwelle des Drehmomentwandlers verbundenen Antriebswelle vollständig von der weiteren Übertagungskette und dem Zusatzaggregat abgekoppelt werden kann, so dass diese Elemente bei Nichtbedarf nicht mitrotieren müssen und keine Verluste und keine Geräusche erzeugen. Der Wirkungsgrad der Nebenabtriebsanordnung steigt dadurch und durch den Wegfall der Schaltkupplung im Abtriebselement kann die Nebenabtriebsanordnung kompakter ausgeführt werden.

Vorteilhafterweise weisen das Antriebselement in der Übertragungskette und die Antriebswelle die gleiche Rotationsachse auf, was der Fall ist, wenn die Rotationsachse des Drehmomentwandlers und des gesamten Getriebes übereinstimmen. Für das Schaltelement ergibt sich dadurch die gleiche Rotationsachse. Wenn das Schaltelement zwischen Antriebswelle und Antriebselement angeordnet ist, kann es ohne negative Beeinflussung des dort vorhandenen Bauraums einen Durchmesser annehmen, der eine große wirksame Oberfläche für eine Drehmomentübertragung oder eine Reibmomenterzeugung im Schaltelement gewährleistet.

In einer vorteilhaften Ausgestaltung der Erfindung ist als Antriebselement der Übertragungskette ein Zahnrad einer aus einer ineinandergreifenden Folge von Zahnrädern bestehenden Zahnradkette vorgesehen. Zahnräder bilden in Nebenabtriebsanordnungen eine bewährte Drehmomentübertragung, die auch dazu genutzt werden kann, bedarfsgerecht die Drehrichtung des Abtriebselementes und damit des Zusatzaggregats anzupassen.

Eine alternative Drehmomentübertragung auf das Zusatzaggregat kann durch einen Umschlingungsantrieb beispielsweise in Form einer metallischen Gliederkette oder eines elastischen Zahnriemens oder Treibriemens erfolgen. Dabei ist vorteilhaft als Antriebselement der Übertragungskette ein Rad des Umschlingungsantriebes vorgesehen, das je nach Anwendung eine Außenverzahnung oder eine entsprechende Aufnahme für den Keilriemen trägt.

Eine Betätigung des Schaltelementes erfolgt erfindungsgemäß hydraulisch. Bei Fahrzeugen mit einer hydraulischen Getriebebetätigung, insbesondere bei hydraulisch geschalteten Automatgetrieben mit einem aus einer Reihe von Planetengetrieben bestehenden Radsatzaufbau, werden die Kupplungen und Bremsen innerhalb des Getriebes von einer hydraulischen Steuerung betätigt, deren Leitungen sich innerhalb oder auch außerhalb des Getriebes befinden und Hydraulikflüssigkeit von der Steuerung zu den Kupplungen und Bremsen führen. Die Leitungen sind innerhalb des Getriebes sowohl in den feststehenden Getriebegehäusewänden als auch in rotierenden Bauteilen wie den Getriebewellen vorgesehen. So ist bei der erfindungsgemäßen hydraulischen Betätigung eine Zufuhr der Hydraulikflüssigkeit durch die Antriebswelle zu dem Schaltelement vorgesehen. Dazu muss eine entsprechende Abdichtung an der Antriebswelle vorgesehen sein, was aber bei derartigen Getrieben eine häufig vorkommende Anwendung ist, weil in einer Vielzahl von Anwendungsfällen Hydraulikflüssigkeit über rotierende Wellen übertragen wird. Das Schaltelement kann dabei unmittelbar auf der Antriebswelle sitzend vorgesehen sein. Bei der erfindungsgemäßen hydraulischen Betätigung ist das Schaltelement hydraulisch an der Steuereinrichtung des Getriebes angeschlossen. Dadurch lässt sich ein weiteres Steuergerät für die Betätigung der Nebenabtriebsanordnung einsparen und das Schaltelement wird direkt aus der Getriebesteuerung heraus betätigt. Funktionelle Abhängigkeiten der Nebenabtriebssteuerung von der Getriebesteuerung können einfach und auf kurzem Wege in der gleichen Steuerung aufeinander abgestimmt werden. Gegebenenfalls ist es auch möglich, bereits in der Standardsteuerung des Getriebes vorhandene Bauteile, wie beispielsweise Ventile etc., auf diese Weise für die Betätigung des Schaltelementes der Nebenabtriebsanordnung mitzuverwenden. Eventuell im Getriebegehäuse vorhandene Druckleitungen können gegebenenfalls auch mitverwendet werden.

Ausgestaltungen des Schaltelements können vorteilhaft vorsehen, dass das Schaltelement als Klauenschaltelement, als Konus-Synchronisierung oder als Reibschaltelement ausgebildet ist. Klauenschaltelemente werden vorzugsweise bei Schaltungen im Stillstand genutzt, ansonsten ist die Notwendigkeit gegeben, dass eine Drehzahlgleichheit der zu verbindenden Teile des Klauenschaltelementes vorliegt, die herbeigeführt oder festgestellt werden muss. Bei Konus-Synchronisierungen kann eine Drehzahlangleichung über die konusförmigen Reibflächen erzielt werden. Bei erreichter Drehzahlgleichheit können dann Kuppelverzahnungen an der Konus-Synchronisierung ineinander eingreifen und das Drehmoment übertragen. Eine Konus-Synchronisierung kann in gleicher Weise wie ein Reibschaltelement während der Fahrt des Fahrzeugs zugeschaltet werden. In einem Reibschaltelement sind mehrere Reiblamellen vorgesehen, die im nichtbetätigten Zustand des Reibschaltelementes relativ zueinander verdrehbar sind und die im betätigten Zustand zusammengedrückt werden, um Drehmoment zu übertragen. Als Paarungsmaterialien aneinander anliegender Reiblamellen kommen Stahl/Stahl und Belag/Stahl in Frage. Geeignete Beläge für Reiblamellen sind allgemein bekannt.

In einer Ausgestaltungform eines Klauenschaltelementes ist dieses mit stirnseitigen Klauen versehen, die bei axialer Betätigung durch ein geeignetes Betätigungsmittel axial ineinandergreifen. Derartige Klauenschaltelemente bauen axial kurz.

Eine weitere Art des Klauenschaltelementes ist vorteilhaft derart ausgestaltet, dass das Klauenschaltelement in einer Schaltmuffe angeordnet ist. Dabei greifen die einzelnen Klauen ebenfalls axial ineinander, die Anordnung der Klauen erfolgt aber an den beteiligten Bauteilen in radialer Richtung. Derartige Klauenschaltelemente bauen regelmäßig axial breiter, aber sie weisen eine höhere Stabilität auf.

Die Erfindung wird anhand einer Zeichnung näher erläutert. Es zeigen:
Fig. 1 eine schematische Darstellung eines Fahrzeugs
Fig. 2 ein Getriebe eines Fahrzeugs mit einer Nebenabtriebsanordnung
Fig. 3 eine schematische Darstellung eines Schaltelementes einer nicht beanspruchten Nebenabtriebsanordnung
Fig. 4 eine schematische Darstellung eines Schaltelementes einer erfindungsgemäßen Nebenabtriebsanordnung

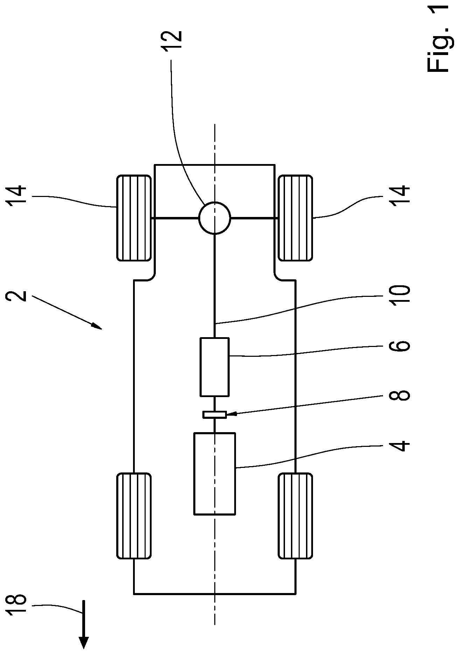

Die Fig. 1 zeigt eine schematische Fahrzeugdarstellung eines Kraftfahrzeugs 2, das einen Antriebsmotor 4, ein Getriebe 6 und einen zwischen Antriebsmotor 4 und Getriebe 6 angeordneten Drehmomentwandler 8 aufweist. Das Getriebe 6 ist über eine Abtriebswelle 10 und ein Differential 12 mit den beiden Hinterrädern 14 verbunden.

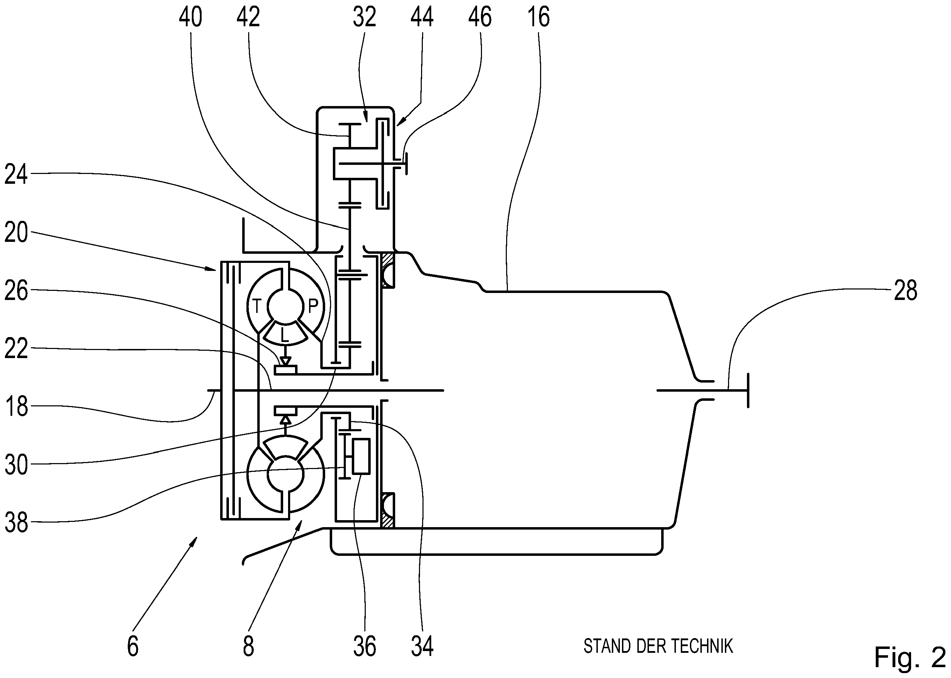

Ein als Automatgetriebe mit Drehmomentwandler 8 ausgebildetes Getriebe 6 nach dem Stand der Technik ist in Fig. 2 dargestellt. In einem Getriebegehäuse 16 ist zwischen der Ausgangswelle 18 des Antriebsmotors 4 und dem Drehmomentwandler 8 eine Überbrückungskupplung 20 vorgesehen, die die Ausgangswelle 18 mit der Getriebeeingangswelle 22 zur Überbrückung des Drehmomentwandlers 8 verbinden kann. Die Ausgangswelle 18 ist über das Pumpenrad P des Drehmomentwandlers 8 mit der Pumpenwelle 24 verbunden. Das Turbinenrad T des Drehmomentwandlers 8 ist mit der Getriebeeingangswelle 22 fest verbunden. Das Leitrad L des Drehmomentwandlers 8 ist über einen Freilauf 26 an dem Getriebegehäuse 16 angeschlossen. Aus dem Getriebe 6 heraus ragt die Ausgangswelle 28, die mit der Abtriebswelle 10 (Fig. 1) verbunden ist.

An der Pumpenwelle 24 angeschlossen ist die Antriebswelle 30 der Nebenabtriebsanordnung 32. Das Antriebselement 34 der Nebenabtriebsanordnung 32 ist in Fig. 2 direkt mit der Antriebswelle 30 verbunden. Das Antriebselement 34 dient einerseits dem Antrieb einer Schmiermittelpumpe 36 über das Zahnrad 38. Andererseits wird über das Antriebselement 34 das Zwischenrad 40 der Nebenabtriebsanordnung 32 verdreht, das wiederum das Abtriebselement 42 der Nebenabtriebsanordnung 32 antreibt. Mit dem Abtriebselement 42 verbunden ist ein Schaltelement 44, das wahlweise das Abtriebselement 42 mit der Abtriebswelle 46 verbindet. In dieser Anordnung drehen sich die Bauteile von der Ausgangswelle 18 des Antriebsmotors 4 bis zur Abtriebselement 42 immer mit.

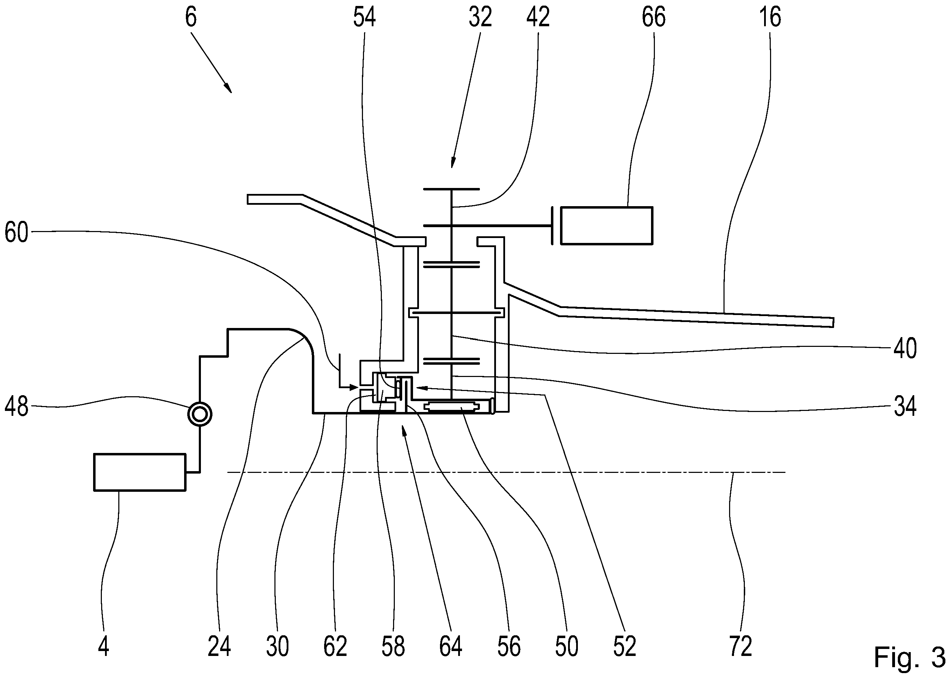

Die Fig. 3 zeigt eine nicht beanspruchte Ausgestaltung einer Nebenabtriebsanordnung 32 in einer schematischen Darstellung. Gleichbedeutende Bauteile mit der Fig. 2 erhalten die gleichen Bezugszeichen. In dem Getriebegehäuse 16 ist die Pumpenwelle 24 über einen Torsions-dämpfer 48 mit dem Antriebsmotor verbunden. An die Pumpenwelle 24 angeschlossen ist die Antriebswelle 30, auf der das Antriebselement 34 der Nebenabtriebsanordnung 32 drehbar gelagert ist, beispielsweise in einem Nadellager 50. Das Abtriebselement 34 weist einen Reiblamellenträger 52 auf, an dem wenigstens eine innenliegende Reiblamelle 54 vorgesehen ist. Die wenigstens eine Reiblamelle 54 kann mit wenigstens einer außenliegenden Reiblamelle 56 an der Antriebswelle 30 in drehmomentübertragende Verbindung gebracht werden, indem der Kolben 58 die Reiblamelle 54 an die Reiblamelle 56 drückt. Die Drehzahldifferenz zum Getriebegehäuse 16 wird über ein Axiallager ausgeglichen. Die Betätigung des Kolbens 58 erfolgt durch einen hydraulisch oder pneumatisch aufgebrachten Druck, dargestellt durch den Pfeil 60, der im Kolbenraum 62 aufgebaut wird. Die Zufuhr des Drucks erfolgt von der Innenseite des Getriebes 6 durch das Getriebegehäuse 16 hindurch.

Reiblamellenträger 52, Reiblamellen 54 und 56 und Betätigungskolben 58 bilden die wesentlichen Bestandteile des Schaltelementes 64. Mit dem Antriebselement 34 kämmt das Zwischenrad 40 in der Nebenabtriebsanordnung 32, das wiederum mit dem Abtriebselement 42 kämmt. Am Abtriebselement 42 ist das anzutreibende Zusatzaggregat 66 unmittelbar angeschlossen.

Durch das Schaltelement 64 kann das Antriebselement 34 von der Antriebswelle 30 abgekoppelt werden. Dadurch werden im abgekoppelten Zustand die Bestandteile der Nebenabtriebsanordnung 32 und das Zusatzaggregat 66 nicht mehr angetrieben und drehen nicht mehr mit der Antriebswelle 30. Geräusche und Verluste der ansonsten angetriebenen und drehenden Elemente entfallen.

Das Schaltelement 64 und die Antriebswelle 30 rotieren dabei um die gleiche Rotationsachse 72.

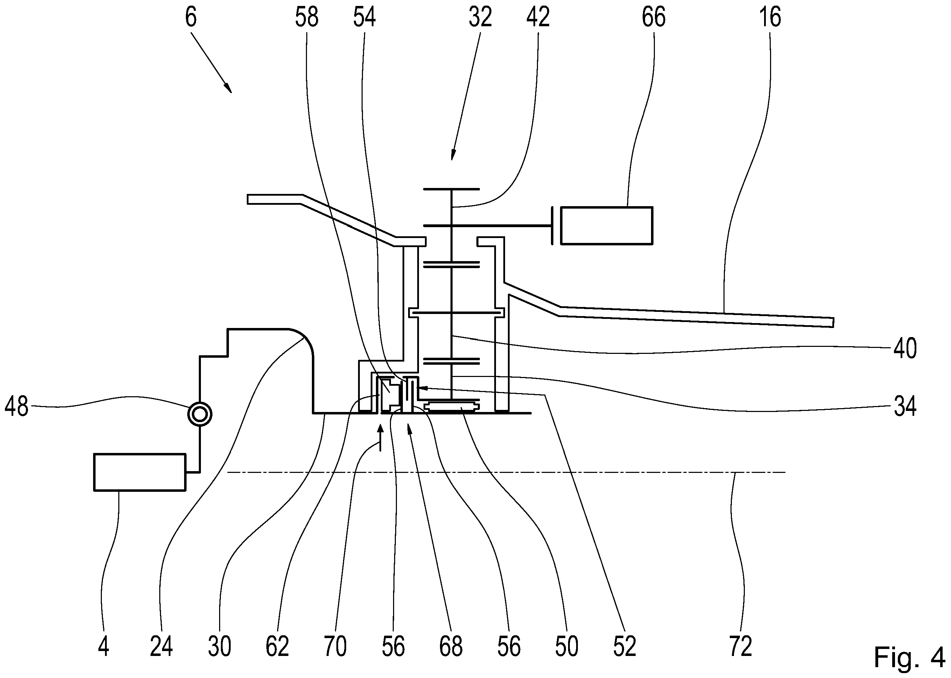

Die Fig. 4 zeigt eine Ausgestaltung der beanspruchten Erfindung, bei der ein geändertes Schaltelement 68 vorgesehen ist. Die weiteren Bauteile entsprechen im Wesentlichen den Bauteilen, die in der Fig. 3 beschrieben sind. An dem Antriebselement 34 ist auch hier ein Reiblamellenträger 52 angebaut, der wenigstens eine innenliegende Reiblamelle 54 aufweist. An der Antriebswelle 30 sind hier zwei außenliegende Reiblamellen 56 vorgesehen, die beidseitig zu der innenliegenden Reiblamelle 54 angeordnet sind. Der Kolben 58 drückt bei Betätigung die Reiblamellen 54 und 56 zusammen und erzeugt dadurch eine Drehmomentübertragung zwischen Antriebswelle 30 und Antriebselement 34. Bei der Betätigung des Kolbens 58 wird hier pneumatisches oder hydraulisches Betätigungsmittel durch die Antriebswelle 30 in den Kolbenraum 62 eingebracht, was durch den Pfeil 70 angedeutet ist.

### Bezugszeichen

- 2: Kraftfahrzeug
- 4: Antriebsmotor
- 6: Getriebe
- 8: Drehmomentwandler
- 10: Abtriebswelle
- 12: Differential
- 14: Hinterrad
- 16: Getriebegehäuse
- 18: Ausgangswelle
- 20: Überbrückungskupplung
- 22: Getriebeeingangswelle
- 24: Pumpenwelle
- 26: Freilauf
- 28: Ausgangswelle
- 30: Antriebswelle
- 32: Nebenabtriebsanordnung
- 34: Antriebselement
- 36: Schmiermittelpumpe
- 38: Zahnrad
- 40: Zwischenrad
- 42: Abtriebselement
- 44: Schaltelement
- 46: Abtriebswelle
- 48: Torsionsdämpfer
- 50: Nadellager
- 52: Reiblamellenträger
- 54: Reiblamelle
- 56: Reiblamelle
- 58: Kolben
- 60: Pfeil
- 62: Kolbenraum
- 64: Schaltelement
- 66: Zusatzaggregat
- 68: Schaltelement
- 70: Pfeil
- 72: Rotationsachse
- P: Pumpenrad
- T: Turbinenrad
- L: Leitrad

## Patentansprüche

1. Nebenabtriebsanordnung (32) für ein einen Drehmomentwandler (8) aufweisendes Getriebe (6) eines Kraftfahrzeugs (2) mit
einer Antriebswelle (30), die dazu ausgebildet ist, um permanent mit einem Antriebsmotor (4) des Kraftfahrzeugs (2) über eine Pumpenwelle (24) des Drehmomentwandlers (8) verbunden zu sein, und
einer wenigstens aus einem Antriebselement (34) und einem Abtriebselement (42) bestehenden Übertragungskette, deren Abtriebselement (42) dazu ausgebildet ist, um mit einem anzutreibenden Zusatzaggregat (66) verbunden zu sein, und
mit einem Schaltelement (68), das zwischen der Antriebswelle (30) und dem Antriebselement (34) der Übertragungskette wirkend angeordnet ist zur wahlweisen Verbindung der Antriebswelle (30) mit dem Antriebselement (34),
**dadurch gekennzeichnet, dass**
die Betätigung des Schaltelementes (68) hydraulisch erfolgt, wobei eine Zufuhr der Hydraulikflüssigkeit zu dem Schaltelement (68) durch die Antriebswelle (30) vorgesehen ist, wobei
das Schaltelement (68) dazu ausgebildet ist, um hydraulisch an einer Steuereinrichtung des Getriebes (6) des Kraftfahrzeugs (2) angeschlossen zu werden.

2. Nebenabtriebsanordnung (32) nach Anspruch 1, **dadurch gekennzeichnet, dass** das Antriebselement (34) in der Übertragungskette und die Antriebswelle (30) die gleiche Rotationsachse (72) aufweisen.

3. Nebenabtriebsanordnung (32) nach Anspruch 1 oder 2, **dadurch gekennzeichnet, dass** als Antriebselement (34) der Übertragungskette ein Zahnrad einer Zahnradkette vorgesehen ist.

4. Nebenabtriebsanordnung (32) nach Anspruch 1 oder 2, **dadurch gekennzeichnet, dass** als Antriebselement der Übertragungskette ein Rad eines Umschlingungsantriebes vorgesehen ist.

5. Nebenabtriebsanordnung (32) nach einem der Ansprüche 1 bis 4, **dadurch gekennzeichnet, dass** das Schaltelement (68) als Klauenschaltelement, als Konus-Synchronisierung oder als Reibschaltelement (52, 54, 56) ausgebildet ist.

6. Nebenabtriebsanordnung (32) nach Anspruch 5, **dadurch gekennzeichnet, dass** das Klauenschaltelement stirnseitige Klauen aufweist.

7. Nebenabtriebsanordnung (32) nach Anspruch 5, **dadurch gekennzeichnet, dass** das Klauenschaltelement in einer Schaltmuffe angeordnet ist.

8. Kraftfahrzeug (2) mit einem einen Drehmomentwandler (8) aufweisenden Getriebe (6) und mit einer Nebenabtriebsanordnung (32) nach Anspruch 1.

## Claims

1. Power take-off arrangement (32) for a transmission (6) of a motor vehicle (2), which transmission (6) has a torque converter (8), with
a drive shaft (30) which is configured to be connected permanently to a drive engine (4) of the motor vehicle (2) via a pump shaft (24) of the torque converter (8), and
a transmission chain which consists at least of a drive element (34) and an output element (42) and the output element (42) of which is configured to be connected to a supplementary unit (66) to be driven, and
with a shifting element (68) which is arranged so as to act between the drive shaft (30) and the drive element (34) of the transmission chain for the selective connection of the drive shaft (30) to the drive element (34),
**characterized in that**
the actuation of the shifting element (68) takes place hydraulically, a supply of the hydraulic liquid to the shifting element (68) through the drive shaft (30) being provided,
the shifting element (68) being configured to be connected hydraulically to a control device of the transmission (6) of the motor vehicle (2).

2. Power take-off arrangement (32) according to Claim 1, **characterized in that** the drive element (34) in the transmission chain and the drive shaft (30) have the same rotational axis (72).

3. Power take-off arrangement (32) according to Claim 1 or 2, **characterized in that** a gearwheel of a gearwheel chain is provided as drive element (34) of the transmission chain.

4. Power take-off arrangement (32) according to Claim 1 or 2, **characterized in that** a wheel of a wraparound drive is provided as drive element of the transmission chain.

5. Power take-off arrangement (32) according to one of Claims 1 to 4, **characterized in that** the shifting element (68) is configured as a dog shifting element, as a cone synchronizer means or as a frictional shifting element (52, 54, 56).

6. Power take-off arrangement (32) according to Claim 5, **characterized in that** the dog shifting element has end-side dogs.

7. Power take-off arrangement (32) according to Claim 5, **characterized in that** the dog shifting element is arranged in a selector sleeve.

8. Motor vehicle (2) with a transmission (6) which has a torque converter (8), and with a power take-off arrangement (32) according to Claim 1.

## Revendications

1. Agencement de sortie secondaire (32) pour une boîte de vitesses (6) d'un véhicule automobile (2) présentant un convertisseur de couple (8), comprenant
un arbre d'entraînement (30) qui est réalisé pour être connecté de manière permanente à un moteur d'entraînement (4) du véhicule automobile (2) par le biais d'un arbre de pompe (24) du convertisseur de couple (8), et
une chaîne de transmission constituée au moins d'un élément d'entraînement (34) et d'un élément de sortie (42), dont l'élément de sortie (42) est réalisé pour être connecté à un groupe supplémentaire à entraîner (66), et
un élément de commutation (68) qui est disposé de manière à agir entre l'arbre d'entraînement (30) et l'élément d'entraînement (34) de la chaîne de transmission pour relier de manière sélective l'arbre d'entraînement (30) à l'élément d'entraînement (34),
**caractérisé en ce que**
l'actionnement de l'élément de commutation (68) s'effectue de manière hydraulique,
une alimentation en liquide hydraulique de l'élément de commutation (68) étant prévue par le biais de l'arbre d'entraînement (30),
l'élément de commutation (68) étant réalisé de manière à être raccordé hydrauliquement à un dispositif de commande de la boîte de vitesses (6) du véhicule automobile (2).

2. Agencement de sortie secondaire (32) selon la revendication 1, **caractérisé en ce que** l'élément d'entraînement (34) dans la chaîne de transmission et l'arbre d'entraînement (30) présentent le même axe de rotation (72).

3. Agencement de sortie secondaire (32) selon la revendication 1 ou 2, **caractérisé en ce que** l'on prévoit en tant qu'élément d'entraînement (34) de la chaîne de transmission une roue dentée d'une chaîne d'engrenages.

4. Agencement de sortie secondaire (32) selon la revendication 1 ou 2, **caractérisé en ce que** l'on prévoit en tant qu'élément d'entraînement de la chaîne de transmission une roue d'un entraînement à courroie.

5. Agencement de sortie secondaire (32) selon l'une quelconque des revendications 1 à 4, **caractérisé en ce que** l'élément de commutation (68) est réalisé sous forme d'élément de commutation à griffes, sous forme de synchronisation conique ou sous forme d'élément de commutation par friction (52, 54, 56).

6. Agencement de sortie secondaire (32) selon la revendication 5, **caractérisé en ce que** l'élément de commutation à griffes présente des griffes frontales.

7. Agencement de sortie secondaire (32) selon la revendication 5, **caractérisé en ce que** l'élément de commutation à griffes est disposé dans un manchon de commutation.

8. Véhicule automobile (2) comprenant une boîte de vitesses (6) présentant un convertisseur de couple (8) et un agencement de sortie secondaire (32) selon la revendication 1.
